# EUROPEAN PATENT SPECIFICATION

(11) **EP 3 310 486 B1**
(45) Date of publication and mention of the grant of the patent: **25.05.2022**
(21) Application number: 16730467.4
(22) Date of filing: 29.03.2016
(51) Int. Cl.: G01N 1/28, G01N 1/42, B02C 17/10, B02C 17/18, B02C 19/18

(54) **CRYOGENIC DISC OR BALL MILLING VESSEL TO A LABORATORY MILL FOR MILLING REACTIVE SAMPLES**
BEHÄLTER ZUM KRYOGENEN MAHLEN MIT KUGEL ODER SCHEIBEN FÜR EINE LABORMÜHLE ZUM MAHLEN VON REAKTIVEN PROBEN
RÉCIPIENT DE BROYAGE CRYOGÉNIQUE À BOULETS OU DISQUE POUR BROYEUR DE LABORATOIRE POUR BROYER DES ÉCHANTILLONS RÉACTIFS

(30) Priority: 27.03.2015 PL 41179015
(43) Date of publication of application: 25.04.2018
(73) Proprietor: Uniwersytet Warszawski, 00-927 Warszawa (PL)
(72) Inventor: FIJALKOWSKI, Karol, 01-684 Warszawa (PL); OWARZANY, Rafal, 38-500 Sanok (PL)
(86) International application number: PCT/IB2016/000390
(87) International publication number: WO 2016/156967

(56) References cited:
- EP-A1- 0 584 712
- DE-A1- 19 832 304
- US-A- 4 640 468
- US-A1- 2009 194 616

## Description

The invention refers to a cryogenic milling vessel, especially disc, ring or ball one, to a laboratory mill suitable for milling reactive samples, ensuring possibility of milling, comminution and homogenising of samples at low temperature and under an inert atmosphere.

In the art there are known laboratory mills for comminution, crushing or homogenising samples. Laboratory mills may contain balls, discs or rings as grinding members placed in properly prepared milling vessel. Such a mill is known for example from DE-A-19,832,304.

Ball milling vessels are known since 19^{th} century (e.g. GB189626501A, US647336A), back then closed cylindrical milling vessel, oriented horizontally, filled with the balls and shredded material was rotated about an axis orientated horizontally. Later appeared ball milling vessels in which rotation took place along the vertical direction: planetary mills (US1912762A), electromagnetic mills (US1894106A) and vibrational mills. In the art there are known thin cylindrical ball mills, in which milling is realised by shaking the material with grinding balls sealed all together in the vessel. There are also known vibrational laboratory mills containing discs and/or rings as grinding members (DE4343742A1). In those devices milling and comminution was conducted at room temperature and under atmospheric air, which resulted in low efficiency of milling and exposure of the sample against atmospheric oxygen and moisture.

In the art there are known devices allowing milling at low temperature. Low temperature milling is more preferred because the friability of the material increases with decreasing temperature. There are known devices that pre-cool the grinded material before final grinding (WO2008/110517A1). Low temperature milling is also carried out by inundation of grinded material and grinding members with cooling medium, preferably liquid nitrogen, directly inside the milling vessel. In such approach it is possible to refill cooling medium during the milling (US3734412A). Such devices provide possibility of low temperature milling, that makes the milling more efficient. Since such devices need to be refilled with the cooling medium, they remain open during milling and the milling takes place in the atmospheric air.

One can also cool down the whole closed milling vessel before milling and/or in between the milling intervals by immersing it in liquid nitrogen. Such procedure provides cooling of grinded sample sealed inside closed milling vessel, whereby it is possible to ensure inert atmosphere inside the milling vessel. Such procedure is however inconvenient because it requires additional big container filled with liquid nitrogen, in which the milling vessel is immersed, and it requires also tongs and protective gloves for operator's safety.

There are known devices with milling vessels comprising special cooling channels (US5513809A) or cooling coating (RETSCH CryoMill, brochure 99.745.0001/E-03-2013), through which the cooling medium, preferably liquid nitrogen circulates. In such devices a continuous cooling is provided while milling vessel is properly sealed, thus enabling efficient milling of reactive samples. However, such devices are expensive, because of a need of additional equipment ensuring continuous flow of cooling medium.

There is known cryogenic disc milling vessel for laboratory mill for milling reactive samples, the mill containing special cooling coating, that can be filled with cooling medium, preferably liquid nitrogen (Rafat Owarzany, B.Sc. Thesis "Synthesis and characterization of zinc amidoborane", University of Warsaw, Faculty of Physics, 2013). In the device the cooling coating is an integral part of the milling vessel. Milling vessel has a lid with a gasket, separating milling compartment from cooling coating. In the lid there is an inlet for pouring the cooling medium into the cooling coating. Such vessel can be cooled down before the milling and/or periodically in between milling intervals. One advantage of such milling vessel is a possibility of adjusting its outer size to a standard size of common laboratory mill vessels, which allows using existing equipment without buying new vibrational mill. Using such milling vessel is inconvenient though, because it requires using of a funnel to fill the cooling coating with liquid nitrogen.

There is known a disc pulveriser disclosing a rock grinder which is separable form a vibrational milling station (US 4640468 A). The grinder comprises a bowl with the bottom having non-flat profile with sections under certain angle in the vicinity of the internal walls. The pulverised does not provide possibility of active cooling of the milling sample when operating.

There is known an apparatus for cryocomminution of heat sensitive materials comprising a chamber which can be cooled by gaseous coolant flowing through an annular zone surrounding the grinding chamber (EP 0584712 A1). Gaseous coolant is being transferred through the apparatus to pass the zone between the rotor and a sieve to cool the samples. Cooling process with use of gaseous medium might is designed to protect polymeric samples against decomposition. Cooling might not be sufficient to enhance brittleness of the samples.

There is known a cryogenic grinding mill for processing polypores, herbs and other organic base materials at cryogenic temperature, having its own motor empowering grinding elements (US 2009/194616 A1). The grinding mill comprising grinding blocks is being disposed inside and annular cryogenic container filled with liquid nitrogen. The annular cryogenic container has a construction of a closed vessel with an inlet and outlet situated on its side walls, this it requires additional means to pump liquid nitrogen. The annular cryogenic container exchanges temperature with the grinding mill by radiation, thus it cannot use all cooling potential of liquid nitrogen and providing cooling of the samples to temperatures not lower than -150°C.

There is known a method and apparatus for ultrafine grinding and/or mixing of solid particles disclosing a grinding chamber comprising cooling jacket inside its outer walls (DE 19832304 A1). Cooling of the grinding chamber is performed by flow of cooling medium though the jacket. This apparatus can lower the temperature of milled material down to -80°C. The apparatus is suitable to use ice water and carbon dioxide ice as cooling media. Unfortunately, the apparatus cannot be loaded under inert atmosphere inside a glovebox since it is secured to the floor via spring elements, thus it is not suitable for air sensitive compounds. Also, it cannot perform milling at temperature much lower than -80°C, thus it cannot take advantage of higher brittleness of matter at lower temperatures.

A goal of the present invention is to design a device allowing easy, fast, cheap and safe milling, comminution or homogenising reactive laboratory samples at low temperature and under inert atmosphere. Another goal of this invention is to design a device, like cryogenic milling vessel, which allows adjusting its outer dimensions to the size of standard milling vessels used in laboratory vibrational mills, which would enable using existing equipment without a necessity of buying a new vibrational mill.

The goal was achieved by a device having the combined features of independent claim 1.

A cryogenic laboratory milling vessel for milling of reactive samples, comprising a cylindrical milling compartment, containing grinding members such as disc, rings or balls, and being closed at the top with a tight lid, the milling compartment being surrounded by cooling space being adapted to be filled with cooling medium, characterised in that the milling compartment is placed inside a cryostatic unit to create the cooling space therebetween, and the milling compartment (1) is separable from the cryostatic unit (8), and dimensioned such that a gap is created between a flange (11) on said cryostatic unit (8) and the surrounding wall of said milling compartment (1), in order to allow at least partial filling with a cooling medium.

The cryogenic milling vessel according to the present invention allows for easy, fast, cheap and safe milling, comminution or homogenisation of the samples at low temperature ensuring no contact of the sample with atmospheric air and moisture. Thanks to the separation of the milling compartment from the cryostatic unit, it is possible to adjust its outer dimensions independently from used vibrational mill. In case of milling of reactive samples using glovebox is required. Possibility of adjusting outer dimensions of the milling compartment to the size of a small antechamber of a glovebox has economic importance as possibility of using small antechamber results in significant increase a speed of transfer and decrease the costs by minimising a volume of consumed inert gas.

Cryogenic milling vessel according to the present invention is described below in examples and shown in a drawing, wherein:
- Fig 1.: shows a general perspective view of the cryogenic milling vessel,
- Fig 2.: shows a top view of the cryogenic milling vessel,
- Fig 3.: shows a cross-section view of the cryogenic milling vessel along the A-A line at Fig. 2,
- Fig 4.: shows a top view of the cryostatic unit of the cryogenic milling vessel,
- Fig 5.: shows a cross-section view along the B-B line at Fig. 4 of the cryostatic unit of the cryogenic milling vessel,
- Fig 6.: shows a top view of the milling compartment of the cryogenic milling vessel with a disc placed inside the milling compartment,
- Fig 7.: shows a cross-section view along the C-C line at Fig. 6 of the milling compartment of the cryogenic milling vessel with the disc placed inside the milling compartment,
- Fig 8.: shows a top view of the milling compartment of the cryogenic milling vessel with a disc and rings placed inside the milling compartment,
- Fig 9.: shows a cross-section view along the D-D line at Fig. 8 of the milling compartment of the cryogenic milling vessel with the disc and rings placed inside the milling compartment,
- Fig 10.: shows a top view of the milling compartment of the cryogenic milling vessel with balls placed inside the milling compartment,
- Fig 11.: shows a cross-section view along the E-E line at Fig. 10 of the milling compartment of the cryogenic milling vessel with balls placed inside the milling compartment,
- Fig 12.: shows a top view of the lid of the cryogenic milling vessel,
- Fig 13.: shows a cross-section view along the F-F line at Fig. 12 of the lid of the cryogenic milling vessel,
- Fig 14.: shows a top view of the cylindrical nut of the cryogenic milling vessel,
- Fig 15.: shows a cross-section view along the G-G line at Fig. 14 of the cylindrical nut of the cryogenic milling vessel.

### Detailed description of the present invention.

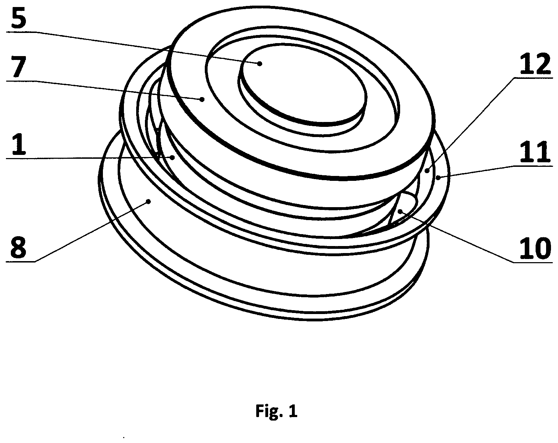

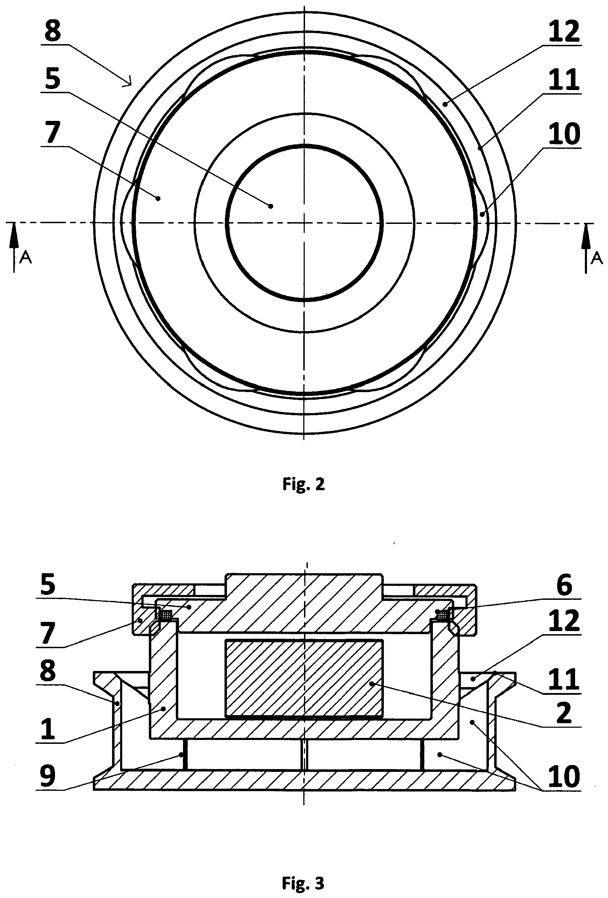

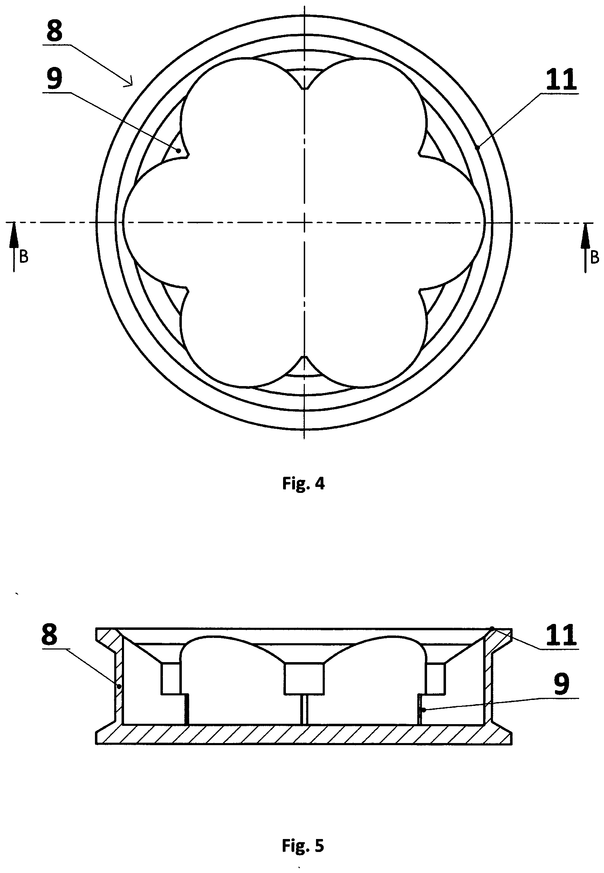

As shown in Fig. 1, Fig. 2 and Fig 3., the cryogenic milling vessel, at this embodiment of the invention, consists of milling compartment 1 and special cryostatic unit 8 forming a cooling coating 10 surrounding the milling compartment 1, where the milling compartment 1 is completely separable from cryostatic unit 8. As shown in Fig 3. Fig. 4 and Fig. 5, cryostatic unit 8 has supports 9 which uphold and stabilise the milling compartment 1 in the cryostatic unit 8. The supports 9 are in the shape and size fitted to the size and shape of the milling compartment 1.

After placing the milling compartment 1 in the cryostatic unit 8 there is an empty space between external walls and a bottom of the milling compartment 1 and internal walls and a bottom of the cryostatic unit 8. This empty space is the cooling coating 10 and can be filled with proper cooling medium, which in this embodiment is liquid nitrogen, but of course in other embodiments another cooling medium with adequate parameters can be used. Volume of the cooling coating 10 depend on sizes of the milling compartment 1 and the cryostatic unit 8 and can vary from a few to hundreds of millilitres. Flange 11, shown on Fig. 2, Fig. 3, Fig. 4 and Fig 5 of the cryostatic unit 8, *i.e.* its upper edge does not touch outer walls of the milling compartment 1 making a gap 12 for pouring the cooling medium into the cooling coating 10, and at the same time keeping the cooling coating 10 open from above. The cooling medium is poured directly into the cooling coating 10 through the gap 12 with handy vessel in which it is stored, in this embodiment - a Dewar flask, but it can also be a thermos.

Milling in the cryogenic milling vessel according to an embodiment can also be conducted without filling the cooling space 10 with a cooling medium. In such case the milling compartment 1 acts as standard room temperature milling vessel.

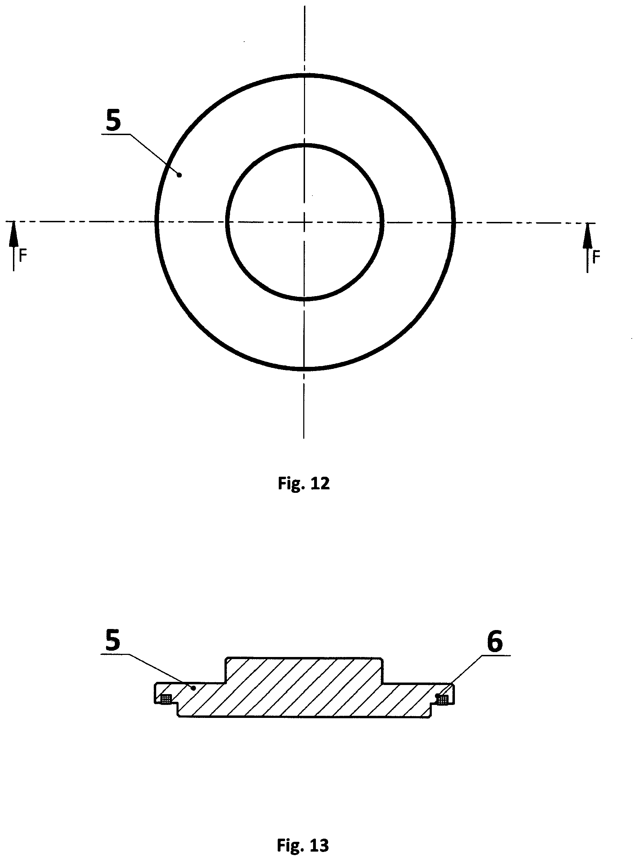

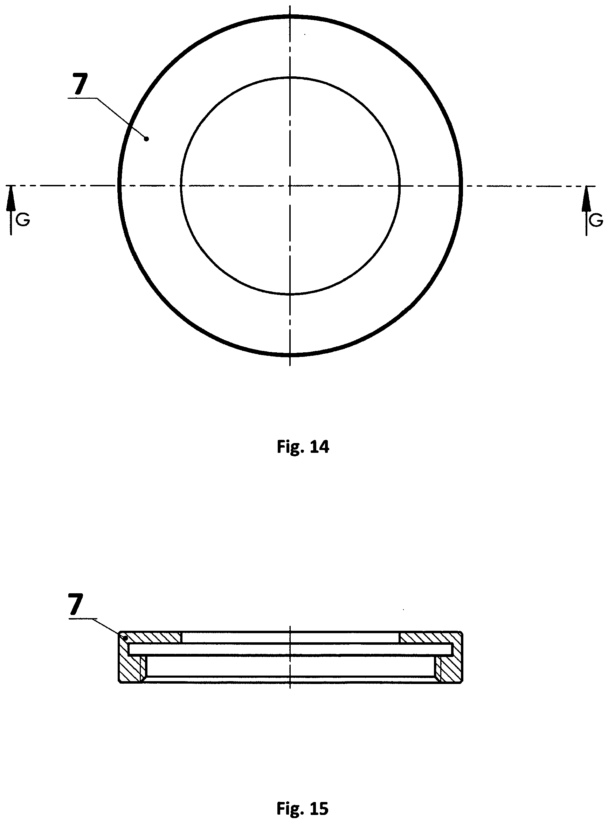

As shown in Fig. 1, Fig. 2. and Fig. 3, the milling compartment 1 has a lid 5, which is placed on the milling compartment 1 from the top. The sealing of the milling compartment is accomplished by placing a ring sealing element 6 between the lid 5 and the upper edge of the milling compartment 1, in this embodiment made of copper, but it can also be made of low temperature resistant rubber or other low temperature resistant material. The lid 5 with the sealing element 6 is shown in Fig. 12 and Fig. 13. To ensure tightness of the milling compartment 1 during milling or other operations, a rifled cylindrical nut 7 is used, shown in Fig. 14 and Fig. 15, which stabilises and tightens the lid 5 thus ensuring tightness of the system. The milling compartment 1, the lid 5 and the cylindrical nut 7 are made of the same material to ensure the same thermal expansion of the system during cooling and milling. In this embodiment, the milling compartment 1, the lid 5 and the cylindrical nut 7 are made of hardened steel, but in other cases materials such as stainless steel can be used.

The milling compartment 1 has a standard construction, it is a metal cylinder closed on the bottom and open at the top. On the outer walls close to upper edge, it has a rifling corresponding to the rifling of the cylindrical nut 7. In the milling compartment 1 there are grinding members. It can be a sole disc 2, a disc 2 with rings 3, sole rings 3 or balls 4. The shape of the interior of the milling compartment 1, especially a profile of the connection between the interior walls and the bottom of the milling compartment 1 must be adjusted to the geometry of the grinding members, *i.e.* in case of disc 2 and rings 3 - to the shape of their edges, in case of balls 4 - to their radius.

Outer dimensions of the milling compartment 1 set together with the lid 5, sealing element 6, the cylindrical nut 7 can be designed in a manner allowing easy transfer into and out of the glovebox using small size antechambers. Milling of the reactive samples when the laboratory mill is exposed to atmospheric air and moisture requires loading and sealing of the milling compartment inside the glovebox filled with an inert gas. Adjusting outer dimensions of the milling compartment to the size of a small antechamber of a glovebox has an economic importance because a possibility of using small antechamber significantly decreases the time of milling preparation and decreases its cost (lower consumption of the inert gas).

Outer dimensions of the cryostatic unit 8 and the height of the cryostatic unit 8 set together with the milling compartment 1 inside may be adjusted so as to correspond with dimensions of standard milling vessels used in laboratory vibrational mills. It enables using existing equipment without a necessity of buying a new vibrational mill.

Cryogenic milling vessel according to the present invention is shown in Fig. 1-15.

In Fig. 1 a general perspective view of the cryogenic milling vessel according to the present invention is shown. The cryogenic milling vessel according to the present invention comprises the milling compartment 1 closed with the lid 5 and cylindrical nut 7. The milling compartment 1 is placed inside the cryostatic unit 8. Between the flange 11 of the cryostatic unit 8 and the outer walls of the milling compartment 1 there is a gap 12 enabling access to the cooling coating 10.

In Fig. 2 and Fig. 3 - resp., a top view and a cross-section view of the cryogenic milling vessel according to the present invention are shown. The cryogenic milling vessel according to the present invention comprises the milling compartment 1 with the disc 2 as a grinding member placed inside, closed with the lid 5 with a sealing element 6 and rifled cylindrical nut 7. The milling compartment 1 is placed inside the cryostatic unit 8 on top of the supports 9. Between the flange 11 of the cryostatic unit 8 and the outer walls of the milling compartment 1 there is the gap 12 enabling access to the cooling coating 10.

In Fig. 4 and Fig. 5 - resp., a top view and a cross-section view of the cryostatic unit 8 of the cryogenic milling vessel according to the present invention are shown. The cryostatic unit 8 contains the supports 9 and the flange 11 hinged outwardly.

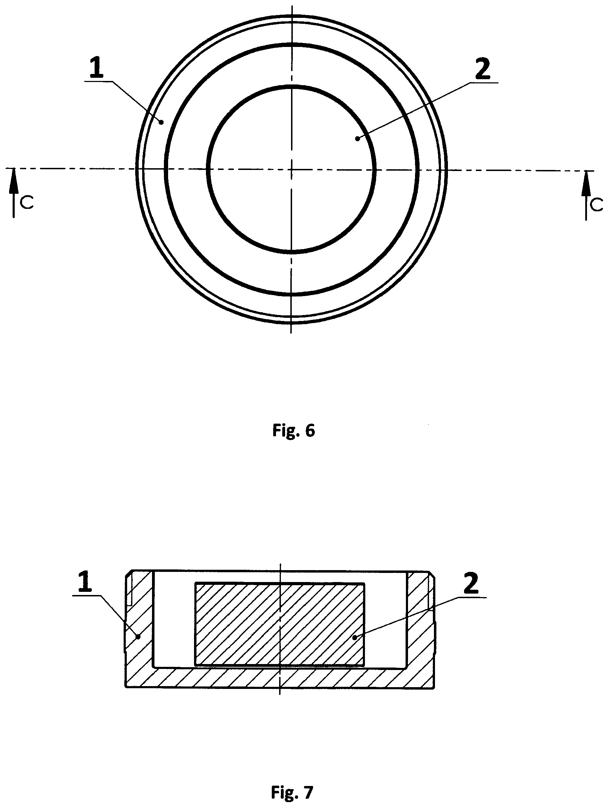

In the embodiment shown in Fig. 6 and Fig. 7 - resp., a top view and a cross-section view of the milling compartment 1 of the cryogenic milling vessel according to the invention with the disc 2 placed inside the milling compartment 1 are shown. The disc 2 is placed inside the milling compartment 1 and the diameter of the disc 2 is smaller than inner diameter of the milling compartment 1, preferably it is 2/3 of the inner diameter of the milling compartment 1. Height of the disc 2 is slightly smaller than the inner height of the milling compartment 1.

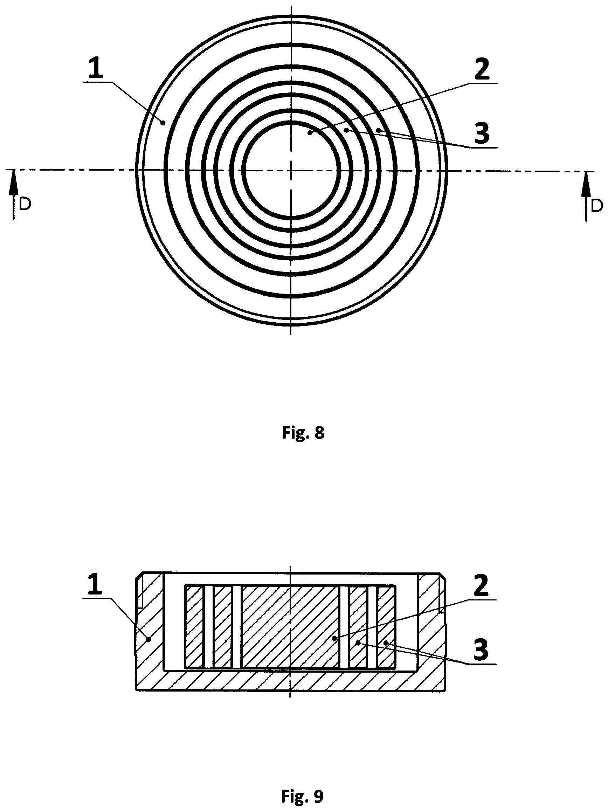

In the embodiment shown in Fig. 8 and Fig. 9 - resp., a top view and a cross-section view of the milling compartment 1 of the cryogenic milling vessel according to the invention with the disc 2 and the rings 3 placed inside the milling compartment 1 are shown. The disc 2 and the rings 3 are placed inside the milling compartment 1. The largest ring 3 has a diameter smaller than the inner diameter of the milling compartment 1, preferably it is 2/3 of the inner diameter of the milling compartment 1. The outer diameter of each further ring 3 is smaller than the inner interior diameter of each larger ring 3. Diameter of the disc 2 is smaller than the inner diameter of the smallest ring 3. Height of the disc 2 and the rings 3 is slightly smaller than the inner height of the milling compartment 1.

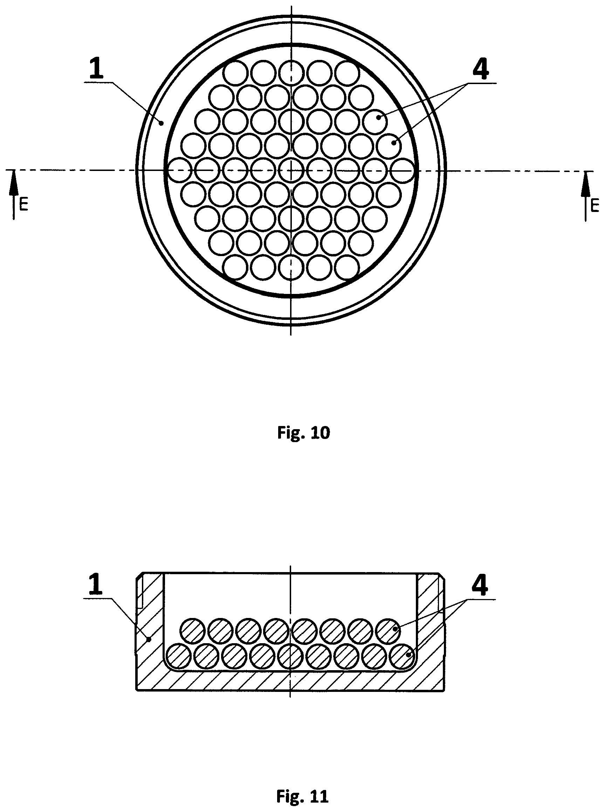

In the embodiment shown in Fig. 10 and Fig. 11 - resp., a top view and a cross-section view of the milling compartment 1 of the cryogenic milling vessel according to the present invention with balls 4 placed inside the milling compartment 1 are shown. The balls 4 are places inside the milling compartment 1. Diameter of the balls 4 corresponds to the radius of the connection profile of the interior walls and the bottom of the milling compartment 1.

In Fig. 12 and Fig. 13 - resp., a top view and a cross-section view of the lid 5 of the cryogenic milling vessel according to the present invention are shown. The lid 5 has a sealing element 6 placed on the bottom surface of the lid 5 in the place of contact with the edge of the milling compartment 1.

In Fig. 14 and Fig. 15 - resp., a top view and a cross-section view of the cylindrical nut 7 of the cryogenic milling vessel according to the present invention are shown. The rifling of the interior walls of the cylindrical nut 7 corresponds to the rifling on the outer walls of the milling compartment 1.

The cryogenic disc or ball milling vessel to a laboratory mill for milling reactive samples is described below in two embodiments and showing their specific use.

**Example 1.** Cryogenic disc milling vessel according to the present invention was made of the hardened steal 4H13. The dimensions of the complete cryogenic milling vessel were adjusted to a laboratory vibrational mill which was used previously in the laboratory. The cryostatic unit 8 had dimensions: 108 mm in diameter, 30 mm total height and 25 mm inner height; height of the supports 9 was 8 mm. The milling compartment 1 had the following dimensions: outer diameter 79 mm, inner diameter 65 mm, total height 30 mm, inner height 25 mm, rifling height 10 mm, outer wall of the milling compartment 1 was knurled. Diameter of the disc was 43 mm, and its height was 21,5 mm. The inner plane diameter of the lid 5 was 75 mm, it has a base of 78 mm in diameter that was inside the milling compartment 1 reaching the depth of 3 mm; the lid has an upper plane of 40 mm in diameter that extends 6.5 mm above the inner plane. The ring sealing element 6 was made of rubber and its diameter was 70 mm and its thickness was 2 mm. The outer diameter of the rifled ring nut 7 was 88 mm, and at its upper plane the nut's clearance has a diameter of 56 mm, the outer wall of the nut 7 was knurled. Total dimensions of the complete cryogenic milling vessel were as follows: a diameter of the bottom base was 108 mm, total height was 55 mm. Volume of the cooling coating 10 after the cryogenic vessel is put together was ca. 30 cm³. The width of the gap 12 providing an access to the cooling coating 10 was 7.5 mm.

**Example 2.** Cryogenic disc milling vessel according to the present invention made of the hardened steal 4H13 was used to conduct a synthesis of sodium amidoborane. The reaction was carried out under inert atmosphere because of high reactivity of odium hydride (one of the substrates) and sodium amidoborane (the product) against atmospheric moisture. The reaction was carried out at low temperature to avoid thermal decomposition of sodium amidoborane (the product). A milling compartment 1, a disc 2, a lid 5 with a rubber ring sealing element and a rifled cylindrical nut 7 were transferred into the glovebox. Inside the glovebox filled with argon the reactants (112 mg of ammonia borane and 88 mg of sodium hydride) were poured to the milling compartment. The milling compartment 1 was closed with the lid 5 with the sealing element 6 and the rifled cylindrical nut 7. The closed milling compartment 1 was transferred out of the glovebox, placed in the cryostatic unit 8 and such set system was placed in the housing of the laboratory vibrational mill. The cryogenic milling vessel was immobilised by a blockade tightening the lid 5 to the milling compartment 1, than the nut was loosen to avoid blocking the rifle and problems with opening the milling compartment 1. The cooling coating 10 was filled with liquid nitrogen by pouring it from a thermos to the cryostatic unit 8 through the gap 12. Pouring was repeated 5 times to cool down the milling compartment 1. The milling was carried out in 3 intervals lasting 1 minute each. In between the milling intervals liquid nitrogen was poured to the cooling coating 10, thus additionally cooling down the reaction mixture. After completion of the milling the nut 7 was tighten back again, the blockade of the laboratory vibrational mill was loosen and the milling compartment 1 was transferred into the glovebox through a small size antechamber. The milling compartment 1 was open inside the glovebox. C.a. 180 mg of sodium amidoborane (the product) was taken out of the interior of the milling compartment 1 and from the surface of the disc 2 and the bottom surface of the lid 5.

## Claims

1. A cryogenic disc or ball milling vessel for a laboratory mill for milling reactive samples, comprising a cylindrical milling compartment (1), containing grinding members such as disc (2), rings (3) or balls (4) and being closed at the top with a tight lid (5), the milling compartment (1) being surrounded by cooling space (10) being adapted to be filled with cooling medium, **characterised in that** the milling compartment (1) is placed inside a cryostatic unit (8) to create the cooling space (10) therebetween, and the milling compartment (1) is separable from the cryostatic unit (8), and dimensioned such that a gap (12) is created between a flange (11) on said cryostatic unit (8) and the surrounding wall of said milling compartment (1), in order to allow at least partial filling with a cooling medium.

2. The cryogenic milling vessel according to claim 1, **characterised in that** the cryostatic unit (8) contain supports (9) upholding and stabilising the milling compartment (1) inside the cryostatic unit (8).

3. The cryogenic milling vessel according to claim 3, **characterised in that** the cooling medium is liquid nitrogen.

4. The cryogenic milling vessel according to claim 1, **characterised in that** the milling compartment (1) comprises the lid (5) equipped with a ring sealing element (6).

5. The cryogenic milling vessel according to claim 4, **characterised in that** the ring sealing element (6) is made of copper.

6. The cryogenic milling vessel according to claim 4, **characterised in that** the ring sealing element (6) is made of low temperature resistant rubber.

7. The cryogenic milling vessel according to claim 4, **characterised in that** the lid (5) equipped with the ring sealing element (6) is tighten to the milling compartment (1) by a rifled cylindrical nut (7).

8. The cryogenic milling vessel according to claim 4, **characterised in that** the milling compartment (1), the lid (5) and the rifled cylindrical nut (7) are made from the same material.

9. The cryogenic milling vessel according to claim 8, **characterised in that** the milling compartment (1), the lid (5) and the rifled cylindrical nut (7) are made from hardened steal.

10. The cryogenic milling vessel according to claim 8, **characterised in that** the milling compartment (1), the lid (5) and the rifled cylindrical nut (7) are made from stainless steel.

## Patentansprüche

1. Labor-Mahlschale für kryogene Vermahlungen reaktiver Proben, mit einer zylindrischen Mahlkammer (1), die Mahlkomponenten wie Scheibe (2), Ringe (3) oder Kugeln (4) enthält und oben mi einem dichten Deckel (5) verschlossen ist, wobei die Mahlkammer (1) von einem mit einem Kühlmedium zu befüllenden Kühlraum (10) umgeben ist, **dadurch gekennzeichnet, dass** die Mahlkammer (1) innerhalb des Kryobehälters (8) angeordnet ist, um einen Kühlraum (10) dazwischen zu schaffen, und die Mahlkammer (1) vom Kryobehälter (8) trennbar ist und solche Abmessungen aufweist, dass zwischen dem Flansch (11) dieses Kryobehälters (8) und der Außenwand der Mahlkammer (1) ein Spalt (12) ausgebildet ist, der einer zumindest teilweise Befüllung mit dem Kühlmedium ermöglicht.

2. Labor-Mahlschale für kryogene Vermahlungen nach Anspruch 1, **dadurch gekennzeichnet, dass** der Kryobehälter (8) Stützen (9) aufweist, die die die Mahlkammer (1) innerhalb des Kryobehälters (8) tragen und stabilisieren.

3. Labor-Mahlschale für kryogene Vermahlungen nach Anspruch 1, **dadurch gekennzeichnet, dass** flüssiger Stickstoff als Kühlmedium verwendet wird.

4. Labor-Mahlschale für kryogene Vermahlungen nach Anspruch 1, **dadurch gekennzeichnet, dass** die Mahlkammer (1) einen mit einem ringförmigen Dichtelement (6) versehenen Deckel (5) aufweist.

5. Labor-Mahlschale für kryogene Vermahlungen nach Anspruch 4, **dadurch gekennzeichnet, dass** das ringförmige Dichtelement (6) aus Kupfer gefertigt ist.

6. Labor-Mahlschale für kryogene Vermahlungen nach Anspruch 4, **dadurch gekennzeichnet, dass** das ringförmige Dichtelement (6) aus einem gegen niedrige Temperaturen beständigen Gummi gefertigt ist.

7. Labor-Mahlschale für kryogene Vermahlungen nach Anspruch 4, **dadurch gekennzeichnet, dass** der mit einem ringförmigen Deckel (6) versehene Deckel (5) mittels einer Gewindemutter (7) gegen die Mahlkammer (1) gedrückt wird.

8. Labor-Mahlschale für kryogene Vermahlungen nach Anspruch 4, **dadurch gekennzeichnet, dass** die Mahlkammer (1), der Deckel (5) und die ringförmige Gewindemutter (7) aus dem gleichen Material gefertigt sind.

9. Labor-Mahlschale für kryogene Vermahlungen nach Anspruch 8, **dadurch gekennzeichnet, dass** die Mahlkammer (1), der Deckel (5) und die ringförmige Gewindemutter (7) aus gehärtetem Stahl gefertigt sind.

10. Labor-Mahlschale für kryogene Vermahlungen nach Anspruch 8, **dadurch gekennzeichnet, dass** die Mahlkammer (1), der Deckel (5) und die ringförmige Gewindemutter (7) aus säurebeständigem Stahl gefertigt sind.

## Revendications

1. Le récipient cryogénique de laboratoire pour le broyage des échantillons réactifs, comportant une chambre de broyage cylindrique (1) contenant des éléments de broyage tels qu'un disque (2), des anneaux (3) ou des billes (4), fermée au sommet par un couvercle étanche (5 ), où la chambre de broyage (1) est entourée d'un espace de refroidissement (10) adapté pour être rempli d'un agent de refroidissement, **caractérisé en ce que** la chambre de broyage (1) est placée à l'intérieur du récipient cryostatique (8) pour créer un espace de refroidissement (10) entre eux, et également la chambre de broyage (1) est séparée du récipient cryostatique (8) et est dimensionnée de telle sorte qu'une lumière de passage (12) est formée entre la bride (11) du récipient cryostatique (8) et le paroi externe de la chambre de broyage (1) permettant que l'agent de refroidissement la remplisse au moins partiellement.

2. Le récipient cryogénique de laboratoire servant à broyer selon la revendication 1 **caractérisé en ce que** le récipient cryostatique (8) comporte des supports (9) supportant et stabilisant la chambre de broyage (1) à l'intérieur du récipient cryostatique (8).

3. Le récipient cryogénique de laboratoire servant à broyer selon la revendication 1 **caractérisé en ce que** l'agent de refroidissement c'est l'azote liquide.

4. Le récipient cryogénique de laboratoire servant à broyer selon la revendication 1 **caractérisée en ce que** la chambre de broyage (1) présente un couvercle (5) pourvu d'un élément d'étanchéité annulaire (6).

5. Le récipient cryogénique de laboratoire servant à broyer selon la revendication 4 **caractérisé en ce que** l'élément d'étanchéité annulaire (6) est fait de cuivre.

6. Le récipient cryogénique de laboratoire servant à broyer selon la revendication 4 **caractérisé en ce que** l'élément d'étanchéité annulaire (6) est fait de caoutchouc résistant à de basses températures.

7. Le récipient cryogénique de laboratoire servant à broyer selon la revendication 4 **caractérisé en ce que** le couvercle (5) pourvu d'un élément d'étanchéité annulaire (6) est pressé contre la chambre de broyage (1) au moyen d'un écrou annulaire fileté (7).

8. Le récipient cryogénique de laboratoire servant à broyer selon la revendication 4 **caractérisée en ce que** la chambre de broyage (1), le couvercle (5) et l'écrou annulaire fileté (7) sont fait du même matériau.

9. Le récipient cryogénique de laboratoire servant à broyer selon la revendication 8 **caractérisé en ce que** la chambre de broyage (1), le couvercle (5) et l'écrou annulaire fileté (7) sont fait d'acier trempé.

10. Le récipient cryogénique de laboratoire servant à broyer selon la revendication 8 **caractérisé en ce que** la chambre de broyage (1), le couvercle (5) et l'écrou annulaire fileté (7) sont fait d'acier résistant aux acides.
